# EUROPEAN PATENT APPLICATION

(11) **EP 2 793 165 A1**
(43) Date of publication of application: **22.10.2014**
(21) Application number: 13305514.5
(22) Date of filing: 19.04.2013
(51) Int. Cl.: G06K 9/00, G06K 9/62, G06Q 50/00, H04W 4/20, H04W 4/02, G06Q 50/10

(54) **Detecting an event captured by video cameras**

(71) Applicant: ALCATEL LUCENT, 92100 Boulogne-Billancourt (FR)
(72) Inventor: Squedin, Sylvain, 91070 Bondoufle (FR); Delegue, Gérard, 94230 Cachan (FR)
(74) Representative: ALU Antw Patent Attorneys

(57) **Abstract**

Embodiments relate to a method for detecting an event captured by video cameras (11) of video capture devices (1), the method being executed by an event detection device (4) and comprising:
- receiving metadata from a plurality of video capture devices (1) equipped with video cameras (11), wherein the metadata received from a video capture device (1) is representative of the field of view of the video camera (11) of said video capture device (1),
- determining at least one common area located in the field of view of the video cameras (11) of a plurality of video capture devices (1).

## Description

### FIELD OF THE INVENTION

The present invention relates to the field of detecting events in function of data associated with those events.

### BACKGROUND

Mobile devices and network technologies allow sharing data related to events in real-time. For example, a person attending a concert or seeing a car crash may use his or her Smartphone to publish a text, a photo and/or a video related to the event on a social network. There are solutions which analyses the messages published on social networks in order to detect events. Some other event detection techniques analyses the content of published videos.

However, the behavior of users tends to shift from publication of texts, photos and/or videos to the sharing of live video streams, and the available techniques are not well suited for detecting events in this context.

### SUMMARY

It is thus an object of embodiments of the present invention to propose a method and a device for detecting an event, which do not show the inherent shortcomings of the prior art.

Accordingly, embodiments of the present invention relates to a method for detecting an event captured by video cameras of video capture devices, the method being executed by an event detection device and comprising:
- receiving metadata from a plurality of video capture devices equipped with video cameras, wherein the metadata received from a video capture device is representative of the field of view of the video camera of said video capture device,
- determining at least one common area located in the field of view of the video cameras of a plurality of video capture devices.

Correspondingly, embodiments of the invention relates to a device for detecting an event captured by video cameras of video capture devices, comprising:
- means for receiving metadata from a plurality of video capture devices equipped with video cameras, wherein the metadata received from a video capture device is representative of the field of view of the video camera of said video capture device, and
- means for determining at least one common area located in the field of view of the video cameras of a plurality of video capture devices.

The metadata may include the location of the video capture device and pan, tilt and zoom data of the video camera, and the method may comprise determining the field of view in function of the metadata.

The at least one area may be located in the field of view of the video cameras of a number of video capture devices above a predetermined threshold.

Determining at least one common area may comprise:
- monitoring the positions of centers of the fields of view, and
- in response to a determination that at least N centers are located within a distance D of each other (with N and D being predetermined thresholds), determining the intersection of the corresponding fields of view.

The method may comprise determining properties of the determined area, the properties including at least an event type.

The event type may be determined in function of data published on a network and/or in function of a content analysis of video streams transmitted by the video capture devices.

At least one of the video capture devices may be a mobile device.

The method may comprise:
- receiving a request from a event viewing terminal,
- determining a ranking of the at least one area in response to the request, and
- sending a response to the event viewing terminal in function of the ranking.

Embodiments also relate to a method for viewing an event captured by video cameras of video capture devices, the method being executed by an event viewing device and comprising:
- transmitting a request to an event detection device,
- receiving a response to the request from the an event detection device, and
- obtaining at least one video stream in function of the response.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a schematic view of a system for sharing video streams related to events,
Figure 2 is a functional view of the event detection device of the system of figure 1,
Figure 3 is a structural view of the event detection device of figure 2,
Figure 4 is a flowchart showing steps of a method for detecting events,
Figure 5 show the field of view of a video camera of the system of figure 1, and
Figure 6 is a flowchart showing steps of a method for detecting events.

### DESCRIPTION OF EMBODIMENTS

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

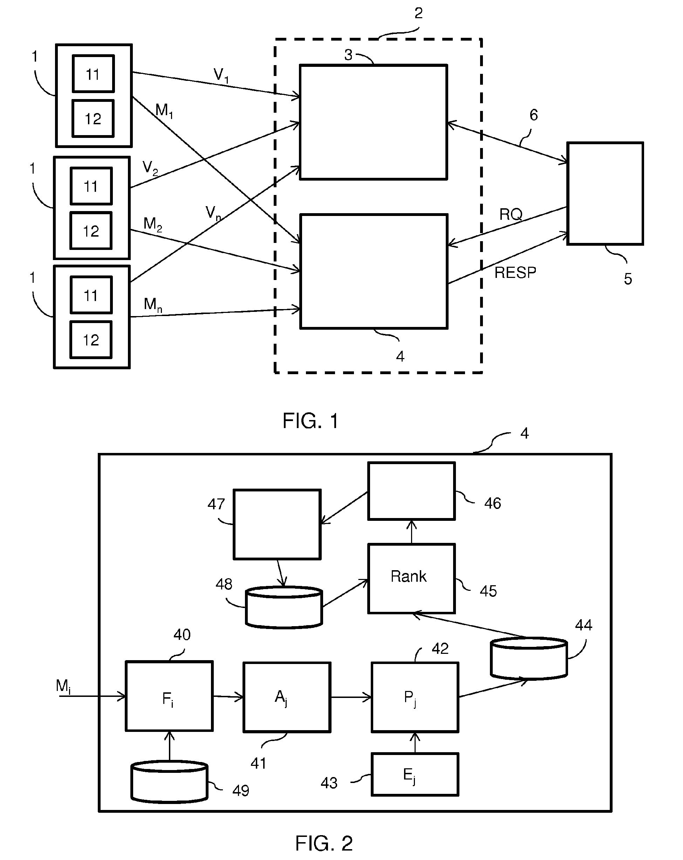

**Figure 1** show a system for sharing video streams captured by video cameras of video capture devices. The system of figure 1 comprises a plurality of video capture devices 1, a video publishing device 3, an event detection device 4, and an event viewing device 5, connected by a communication network.

The video capture devices 1 are equipped with a video camera 11 and a communication interface 12. The communication interface 12 allows transmitting the video stream V₁, V₂... Vₙ captured by the video camera 11 to the video publishing device 3. The video streams Vᵢ may include sound, i.e. they may be audiovisual streams. The communication interface 12 also allows communication metadata M₁, M₂... Mₙ to the event detection device 3. The metadata Mᵢ may be included in the video stream Vᵢ, or transmitted separately.

A video capture device 1 may be a mobile device, for example a handheld user terminal such as a Smart Phone or a tablet. In another example, a video capture device 1 is located in a fixed place, for example it is a video surveillance camera.

The video publishing device 3 receives the video streams Vᵢ from the video capture devices 1.

The event detection device 4 receives the metadata Mᵢ from the video capture devices 1, and detects events captured by the video cameras 11 in function of the metadata Mᵢ. The functioning of the event detection device 4 will be described in more details hereafter.

Finally, the event viewing device 5 is a user terminal capable of receiving and displaying video streams, such as a personal computer, a smart TV, a Smart Phone, a tablet... The event viewing device 5 may interrogate the event detection device 4 to learn about the detected events and the corresponding video streams, and obtains the video stream(s) of a detected event from the video publishing device 3 (as represented by arrow 6).

The video publishing device 3 and the event detection device 4 may be part of a multimedia server 2.

Furthermore, although the video capture devices 1 and the event viewing device 5 are shown as different entities on figure 1, a unique device (for example a user's Smartphone) may play the role of a video capture device 1 and of an event viewing device 5, either at the same time or not. Also, although figure 1 shows only one event viewing terminal 5, it should be understood that a plurality of event viewing terminal may each request video events from the server 2.

**Figure 2** is a functional view of the event detection device 4.

The event detection device 4 comprises a field of view determination module 40, an area determination module 41, and a camera optical properties database 49.

The field of view determination module 40 receives the metadata Mᵢ from the video capture devices 1, and determines the fields of view Fᵢ of the corresponding video cameras 11 in function of the received metadata Mᵢ. A field of view Fᵢ is a geometric form delimiting a 3D-space.

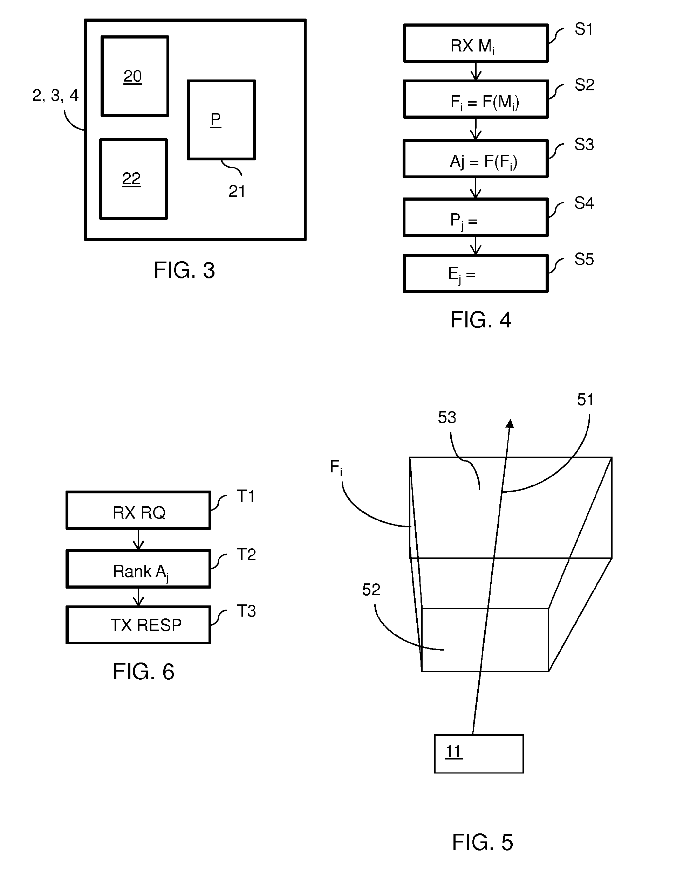

The metadata Mᵢ received from a video capture device 1 may include for example the location of the video capture device 1, the pan, tilt and zoom data of its video camera 11, a producer ID for identifying the user of the video capture device 1, and a camera ID for identifying the type of the video camera 11. The field of view determination module 40 then determines the field of view Fᵢ in function of the received location, pan, tilt and zoom data, taking into account camera optical properties associated with the received camera ID in the camera optical properties database 49. A more detailed example of the determination of a field of view Fᵢ will be described with reference to figure 5.

In another example, the video capture device 1 or an intermediary node between the video capture device 1 and the event detection device 4 determines the field of view Fᵢ in function of location, pan, tilt and zoom data. In that case, the metadata Mᵢ received by the event detection device 4 comprises the field of view Fᵢ and no calculation by the field of view determination module 40 is required.

The area determination module 41 determines the areas Aⱼ located in a plurality of fields of view Fᵢ determined by the field of view determination module 40. In other words, an area Aⱼ corresponds to the intersection of a plurality of fields of view Fᵢ, and may therefore be referred to as a common area. The area determination module 41 may use a threshold T such that an area Aⱼ corresponds to the intersection of at least T fields of view Fᵢ. The idea behind this determination is that if an area is captured by a plurality of video cameras, it is likely that an interesting event is occurring in the area. For example, in a music concert event, a plurality of members of the public may capture the scene with the video cameras of their mobile terminals. Detecting that the corresponding video streams intersect allows detecting the music concert event.

In an embodiment, the area determination module 41 monitors the positions of the geometric centers of the fields of view Fᵢ, which may vary when updated metadata Mᵢ are received. When at least N geometric centers are located within a distance D of each other (with N and D being predefined thresholds), the area determination module 41 determines the intersection (in percentage) of the corresponding fields of view Fᵢ. In this manner, the calculation of an intersection of a plurality of fields of view Fᵢ is only performed when useful.

If the result shows that at least T fields of view Fᵢ overlap, an area Aⱼ is determined. The area Aⱼ is captured by the video cameras 11 of a plurality of video capture devices 1.

The event detection device 4 also comprises an area properties determination module 42, an event identification module 43 and an area database 44.

When an area Aⱼ is identified by the area determination module 41, the area properties determination module 42 determines properties of the identified area Aj. The properties may include for example:
- Size and shape of the area Aⱼ,
- List of video streams Vᵢ associated with the area Aⱼ,
- A quality coefficient Q of the area Aⱼ,
- An event type.

The quality coefficient Q represents a quality of the video experience available for an event occurring in area Aⱼ. The quality coefficient may be determined for example in function of:
- Parameters of the video streams Vᵢ associated with the area Aⱼ (resolution, bit rate, ...),
- Optical parameters of the video cameras 11 associated with the area Aⱼ,
- Consistency of the bit rate of the video streams Vᵢ, which gives indication about the network quality of the producer,
- Durability of the video streams Vᵢ in time and space,
- Rankings of the producers of the video streams Vᵢ...

The event type may be identified by the event identification module 43. For example, the event identification module 43 search for keywords in available data associated with the geographical location of the area Aⱼ, such as data shared on a social network or open data from various organizations (cities...). The event identification module 43 may also analyze the video steams Vᵢ in order to recognize patterns associated with predetermined event types, such as car crash, fire... In case the event identification module 43 is unable to identify the event type, it may output an "unknown event" result.

The area properties Pⱼ determined by the area properties determination module 42 are stored in the area database 44.

Finally, the event detection device 4 also comprises area ranking module 45, a recommendation module 46, a producer ranking module 47 and a producer database 48.

The area ranking module 45 is in charge of ranking the areas Aⱼ stored in the area database, in response to a request RQ received from the event view terminal 5. The criteria used for ranking the areas Aⱼ may include:
- The content of the request RQ,
- A user's profile associated with the user of the event view terminal 5,
- The quality coefficients Q of the areas Aⱼ,
- The areas properties Pⱼ,
- The popularity of the locations associated with the areas Aⱼ,
- The real-time audiences of the video streams Vᵢ associated with the areas Aⱼ,
- The reputation of the producers of the video streams Vᵢ associated with the areas Aⱼ,

For example, a user may send a request "give me the most captured locations". In that case, the number of video streams associated with the areas Aⱼ will be the main criteria used for ranking the areas Aⱼ. In another example, a user may send a request "give me the music events with more than 10 live streams". In that case, the event type will also be used for ranking the areas Aⱼ.

The recommendation module 46 sends a response RESP to the event view terminal 5, based on the highest ranking areas determined by the area ranking module 45. In an embodiment, the response RESP may consist in transmitting one of the video streams associated with the highest rank area Aⱼ to the event viewing terminal 5. In another embodiment, the response RESP may include a list of areas Aⱼ and identifier of the associated video streams Vᵢ. The event viewing terminal 5 may then select one of the video streams Vᵢ and request the selected video stream Vᵢ from the video publishing device 3.

The producer ranking module 47 is in charge of determining the reputation of the producers of the videos streams. The reputation of a producer may be determined for example in function of the usage of the videos streams Vᵢ of this producer, by manual ranking... The reputation of the producers are stored in the producer database 48 and used by the area ranking module 45 for ranking the areas Aⱼ.

**Figure 3** is a structural view of an apparatus, which may be the video publishing device 3, the event detection device 4 or the multimedia server 2. The apparatus of figure 3 has the material architecture of a computer and comprises a processor 20, a memory 21 and a communication interface 22. The processor 20 allows executing computer programs stored in the memory 21. The communication interface 22 allows communication with other devices of the system of figure 1.

**Figures 4 and 6** are flowcharts of a method for detecting events, executed by the event detection device 4. The steps of figures 4 and 6 correspond to the functions of the modules of figure 2, and may correspond to the execution of a computer program P by the event detection device 4.

The field of view determination module 40 receives the metadata Mᵢ from the video capture devices 1 (step S1), and determines the fields of view Fᵢ of the corresponding video cameras 11 in function of the received metadata Mᵢ (Step S2).

An example of determination of a field of view Fᵢ is shown on Figure 5. In this example, the field of view Fᵢ has the shape of a quadrilateral frustum, delimited by two parallel rectangular faces and four trapezoidal faces.

First, a line 51 representing the direction of view is determined, from the position of the video camera 11 and the pan/tilt data of the metadata Mᵢ. The line 51 starts at the position of the video camera 11 and has a direction defined for example by a polar angle and an azimuth angle.

Then, the position of a first rectangle 52 is determined. The position of the rectangle 52 represents the part of the captured video that is useful because it is not blurred, and depends on the focal distance and aperture angle of the video camera 11.

Then, the position of a second rectangle 53 is determined. The position of the rectangle 53 depends on optical characteristics such as the zoom and aperture of the video camera 11.

This results in the definition of the field of view Fᵢ as a quadrilateral frustum.

Other shapes of field of view Fᵢ may be used. For example, in an embodiment, the field of view determination module 40 may takes into account the locations of obstacles (obtained for example from a 3D map) for determining parts of the quadrilateral frustum that are blocked from seeing.

Referring again to Figure 4, the area determination module 41 determines the areas Aⱼ located in a plurality of fields of view Fᵢ (Step S3). When an area Aⱼ is identified by the area determination module 41 at step S3, the area properties determination module 42 determines properties Pⱼ of the identified area Aⱼ (Step S4). This includes determining an event type Eⱼ by the event identification module 43 (Step S5).

It should be understood that although figure 4 shows the steps S1 to S5 as successive steps, the steps may be executed in parallel. For example, steps S1 to S3 are executed continuously in response to the reception of new metadata Mᵢ in metadata steams, and steps S4 and S5 are executed in response to the determination of an area Aⱼ at step S3.

Referring now to figure 6, when the event detection device 4 receives a request RQ from the event viewing device 5 (step T1), the area ranking module 45 ranks the determined areas Aⱼ (step T2).

Then, the recommendation module 46 sends a response RESP to the event view terminal 5 (step T3), based on the ranking determined at step T2.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for detecting an event captured by video cameras (11) of video capture devices (1), said method being executed by an event detection device (4) and comprising:
- receiving (S1) metadata (Mᵢ) from a plurality of video capture devices (1) equipped with video cameras (11), wherein the metadata (Mᵢ) received from a video capture device (1) is representative of the field of view (Fᵢ) of the video camera (11) of said video capture device (1),
- determining (S3) at least one common area (Aⱼ) located in the field of view (Fᵢ) of the video cameras (11) of a plurality of video capture devices (1).

2. Method according to claim 1, wherein said metadata (Mᵢ) include the location of the video capture device (1) and pan, tilt and zoom data of the video camera (11), said method comprising determining (S2) said field of view (Fᵢ) in function of said metadata (Mᵢ).

3. Method according to one of claims 1 and 2, wherein said at least one area (Aⱼ) is located in the field of view (Fᵢ) of the video cameras (11) of a number of video capture devices (1) above a predetermined threshold.

4. Method according to one of claims 1 to 3, wherein determining (S3) at least one common area (Aⱼ) comprises:
- monitoring the positions of centers of the fields of view (Fᵢ), and
- in response to a determination that at least N centers are located within a distance D of each other (with N and D being predetermined thresholds), determining the intersection of the corresponding fields of view (Fᵢ).

5. Method according to one of claims 1 to 4, comprising determining (S4) properties (Pⱼ) of the determined area (Aⱼ), said properties including at least an event type (Eⱼ).

6. Method according to claim 5, comprising determining (S5) said event type (Eⱼ) in function of data published on a network and/or in function of a content analysis of video streams (Vᵢ) transmitted by the video capture devices (1).

7. Method according to one of claims 1 to 6, wherein at least one of said video capture device (1) is a mobile device.

8. Method according to one of claims 1 to 7, comprising:
- receiving (T1) a request (RQ) from a event viewing terminal (5),
- determining (T2) a ranking of the at least one area (Aⱼ) in response to said request (RQ), and
- sending (T3) a response (RESP) to said event viewing terminal (5) in function of said ranking.

9. Computer program comprising instructions for performing the method of one of claims 1 to 8 when said instructions are executed by a computer.

10. Device (2, 4) for detecting an event captured by video cameras (11) of video capture devices (1), comprising:
- means (20, 21, 22) for receiving metadata (Mᵢ) from a plurality of video capture devices (1) equipped with video cameras (11), wherein the metadata (Mᵢ) received from a video capture device (1) is representative of the field of view (Fᵢ) of the video camera (11) of said video capture device (1), and
- means (20, 21, 22) for determining at least one common area (Aⱼ) located in the field of view (Fᵢ) of the video cameras (11) of a plurality of video capture devices (1).

11. Method for viewing an event captured by video cameras (11) of video capture devices (1), said method being executed by an event viewing device (5) and comprising:
- transmitting a request (RQ) to an event detection device (2, 4) according to claim 10,
- receiving a response (RESP) to said request (RQ) from said an event detection device (2, 4), and
- obtaining at least one video stream (Vᵢ) in function of said response (RESP).
